# EUROPEAN PATENT SPECIFICATION

(11) **EP 1 821 294 B1**
(45) Date of publication and mention of the grant of the patent: **16.02.2011**
(21) Application number: 07107736.6
(22) Date of filing: 24.09.2002
(51) Int. Cl.: G11B 7/0045, G11B 7/125

(54) **Method and Apparatus for Recording Data on Optical Recording Medium**
Verfahren und Vorrichtung zur Datenaufzeichnung auf einem optischen Aufzeichnungsmedium
Procédé et appareil d'enregistrement de données sur un support d'enregistrement optique

(30) Priority: 29.09.2001 KR 20010061039; 18.12.2001 KR 20010080541
(43) Date of publication of application: 22.08.2007
(62) Divisional of application: 02256626.9
(73) Proprietor: SAMSUNG ELECTRONICS CO., LTD., Suwon-si, Gyeonggi-do (KR)
(72) Inventor: Ahn, Yong-jin 105-1401 Woosung Apt, 137-793, Seoul (KR); Park, In-sik 615-801 Shinnamushil, Suwon-si, Gyeonggi-do (KR); Lee, Kyung-geun 122-1002 Sibeom Hanshin Apt., Seongnam-si, Gyeonggi-do (KR); Yang, Chang-jin 101-1005 SK Apt., 449-900, Gyeonggi-do (KR); Otsuka, Tatsuhiro 18-205 Wooman Hyundai Apt., Suwon-si, Gyeonggi-do (KR); Yoon, Du-seop 110-1901 LG Samick Apt., Suwon-si, Gyeonggi-do (KR); Kim, Seong-sue 203-404 Kumbo Samsung Raemian apt., Seongdong-gu, Seoul (KR)
(74) Representative: Robinson, Ian Michael

(56) References cited:
- JP-A- 2000 222 734
- US-A- 5 150 351

## Description

The present invention relates to a method and apparatus for recording data on an optical recording medium, and more particularly, to a method in which digital data is recorded on an optical disc by forming a mark on the optical disc.

An optical disc is one form of optical recording media. To record data, a mark is formed on a track of the optical disc. A mark is formed as a pit in a read-only disc such as a Compact Disc-Read Only Memory (CD-ROM) and a Digital Versatile Disc-Read Only Memory (DVD-ROM). In a recordable disc such as a CD-R/RW and a DVD-R/RW/RAM, a phase-change film which changes into a crystalline phase or an amorphous phase is formed in the recording layer, and a mark is formed by a phase change of the phase-change film.

Methods for recording data can be divided into a mark edge recording method, and a mark position recording method. According to the mark position recording method, the sign of the amplitude of a detected Radio Frequency (RF) signal changes from negative to positive or from positive to negative at a location on which a mark is recorded. According to the mark edge recording method, the signal of the amplitude of a detected RF signal changes from negative to positive or from positive to negative at both edges of a mark. Therefore, recording the edges of a mark is an important factor in improving the quality of a reproducing signal.

However, in a disc on which a phase-changing film is coated, it is shown that the shape of a trailing edge of a mark recorded according to the prior art recording method changes according to the length of a mark or an interval between marks, i.e., the space. That is, the trailing edge of a mark is formed greater than the leading edge of the mark such that the characteristics of recording/ reproducing are degraded. If a recording mark is relatively long, the characteristics are more degraded.

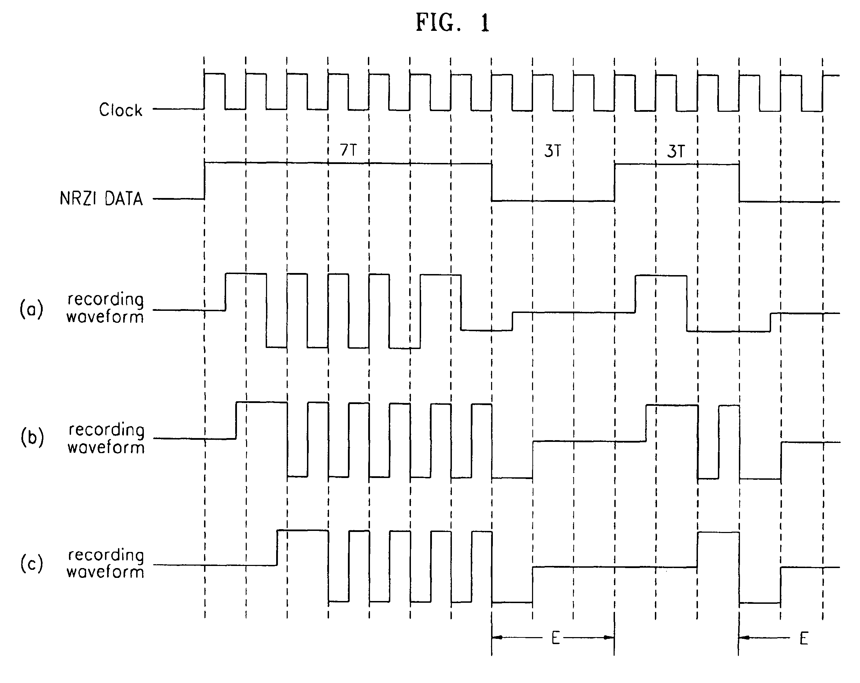

Figure 1 is a reference diagram of a recording waveform according to prior art.

Referring to Figure 1, a variety of recording waveforms (a), (b) and (c) for recording Non Return to Zero Inverted (NRZI) data are shown. Recording waveform (a) is for a DVD-RAM, recording waveforms (b) and (c) are for a DVD-RW. Here, T denotes the cycle of a reference clock. According to the mark edge recording method, the high level of NRZI data is recorded as a mark and the low level of NRZI data is formed as a space. A recording waveform used in recording a mark is referred to as a recording pattern, and a recording waveform used in forming a space (in erasing a mark) is referred to as an erase pattern. The prior art recording waveforms (a), (b) and (c) use a multi-pulse as a recording, and the power of an erase pattern is maintained in a predetermined DC level as shown in interval E.

Since the erase pattern included in the prior art recording waveform is maintained as the DC level for a predetermined time, 0~200°C heat is applied to the corresponding area continuously. Therefore, if recording is repeated multiple times, the shape of a mark is degraded and distorted such that the characteristics of recording/reproducing are degraded. In particular, development toward high density and high line speed for recording more data on a disc makes clock cycle T shorter and therefore heat interference between pulses forming a recording waveform increases to cause more degradation.

Meanwhile, in the prior art, different recording waveforms are used according to the kinds of optical discs and the specifications such as DVD-RAM and DVD-RW, because the characteristics of recording films are different. In particular, the fact that different recording waveforms should be used for each kind of discs means a problem in manufacturing a multi-drive which can record/reproduce all specifications of discs, because the multi-drive should accommodate a variety of recording waveforms. The problem causes an increase in cost.

US 5,150,351 discloses a recording apparatus which during a pulse duration period a modulated signal has narrow pulses which vary between a peak power level and a playback power level and during a pulse spacing period the modulated signal has narrow pulses which vary between an erase power level and the playback power level. This document forms the pre-characterising portion of the claims appended hereto.

It is an aim of the present invention to provide a recording method and apparatus in which the distortion of the shapes of the leading edge and trailing edge of a mark and degradation by repeated recording can be prevented.

Another aim of the present invention is to provide a recording method in which data is recorded by a recording waveform having an erase pattern which can improve the shape of a mark.

Yet another aim of the present invention is to provide a recording method in which data is recorded by a recording waveform which can be applied to a disc having a recording film with a variety of characteristics.

According to the present invention there is provided method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
Figure 1 is a reference diagram of a recording waveform according to prior art;
Figure 2 is a block diagram of a recording apparatus according to an example of the present invention;
Figure 3 shows an example of an implementation of the recording apparatus of Figure 2;
Figure 4 shows an example of a waveform generated by a recording waveform generating circuit;
Figure 5 shows another example of a waveform generated by the recording waveform generating circuit;
Figures 6a through 6d are waveforms for explaining four types of erase patterns according to a preferred embodiment of the present invention;
Figures 7e and 7f are other examples of LH of Figure 6a;
Figures 8 through 10 are shapes of marks recorded in a simulation;
Figures 11 through 15 are graphs showing the characteristics of a DVD-RAM;
Figures 16 through 20 are graphs showing the characteristics of a DVD-RW; and
Figure 21 is a flowchart showing a recording method according to a preferred embodiment of the present invention.

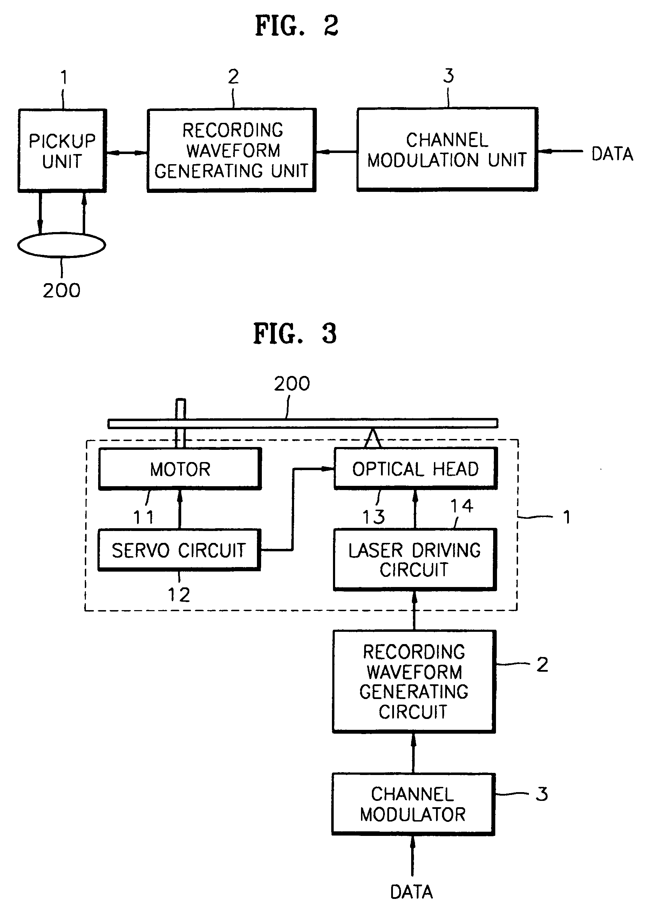

Figure 2 is a block diagram of a recording apparatus according to an example of the present invention. Referring to Figure 2, the recording apparatus which forms a mark on an optical recording medium 200 has a pickup unit 1, a recording waveform generating circuit 2, and a channel modulation unit 3.

The channel modulation unit 3 modulates data which is input from the outside into a channel bit stream. The recording waveform generating unit 2 receives the channel bit stream and generates a recording waveform for recording the received channel bit stream. The recording waveform generated has an erase pattern having an erase multi-pulse. The waveform will be explained later. The pickup unit 1 applies light to the optical recording medium 1 according to the generated recording waveform so as to form a mark or a space.

Figure 3 shows an example of an implementation of the recording apparatus of Figure 2. The same blocks will be indicated by the same reference numerals and the same explanation will be omitted.

Referring to Figure 3, the recording apparatus includes a pickup unit 1, a recording waveform generating circuit 2, and a channel modulator 3. The pickup unit 1 has a motor 11 for rotating an optical disc 200, an optical head 13 for receiving laser light reflected onto the optical disc 200, a servo circuit 12 for servo control, and a laser driving circuit 14 for driving a laser device (not shown) installed in the optical head 13.

The channel modulator 3 modulates input data into a channel bit stream, and outputs NRZI data. The recording waveform generating circuit 2 generates a recording waveform for recording NRZI data and provides the recording waveform to the laser driving circuit 14.

The laser driving circuit 14 forms a mark or a space by controlling a laser with using the received recording waveform.

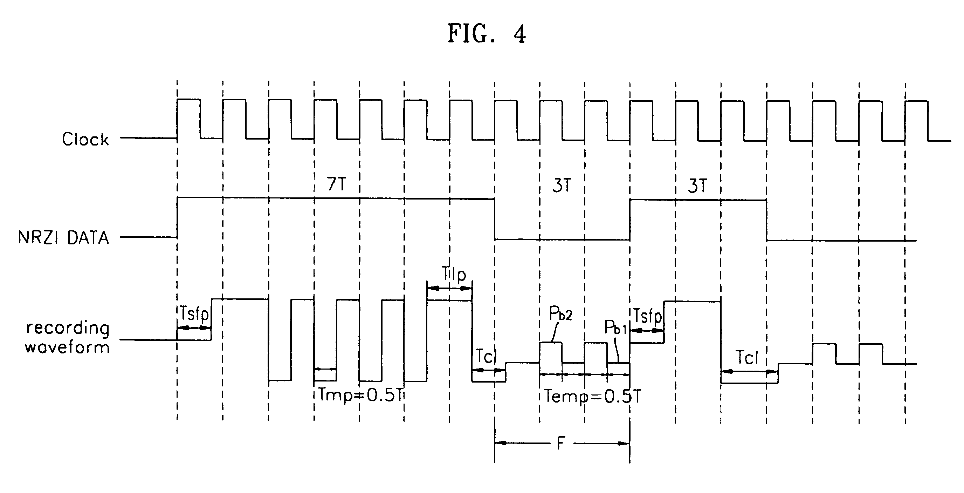

Figure 4 shows an example of a waveform generated by the recording waveform generating circuit 2.

Referring to Figure 4, NRZI data changes according to a modulation method of the channel modulator 3. That is, if the modulation method is a Run Length Limited (RLL)(2, 10) series method, that is, according to Eight to Fourteen Modulation (EFM), Eight to Fourteen Modulation plus (EFM+), D(8-15), and Dual modulation, the minimum mark length is 3Ts and the maximum mark length is 11Ts. Here, D(8-15) is a modulation method disclosed in "Optical Disc Recording System of 25GB Capacity" announced by Matsushita in Optical Data Storage (ODS) 2001. Dual modulation is disclosed in Korea Patent Application No. 99-42032 "An RLL code allocation method, modulation and demodulation method, and demodulation apparatus having improved DC controlling capability," filed by the present applicant on 30, September, 1999, and laid open on 25, November, 2000. If data is recorded using an RLL(1, 7) series method, the minimum recording mark is 2Ts, and the maximum recording mark is 8Ts.

When a high level is formed as a mark and a low level is formed as a space in NRZI data, the recording waveform includes a recording pattern for recording a mark of a 7T length, an erase pattern for forming a space of a 3T length, and a recording pattern for recording a mark of a 3T length.

The recording pattern is composed of a pulse train. Also, the erase pattern is formed with a pulse train as shown in interval F. Tmp indicates the width of a multi-pulse forming a recording pattern. Here, the multi-pulse indicates at least one pulse having the same width and power. In the present embodiment, Tmp is 0.5Ts. Tlp indicates the width of the last pulse forming a recording pattern. Tcl indicates the width (duration time) of a cooling pulse. The cooling pulse extends from a recording pattern to an erase pattern. Temp indicates the width of an erase multi-pulse forming an erase pattern. In the present embodiment, Temp is 0.5Ts. Tsfp indicates a period from a point when NRZI data is transited from a low level to a high level to a point (start of first pulse) when a first pulse forming a recording pattern starts. Tsfp has an influence over the power level of an erase pattern. That is, as shown in Figure 4, if Tsfp is greater than 0.5Ts and a multi-pulse contained in an erase pattern ends at low level Pb1, the next Tsfp starts from high level Pb2 of the multi-pulse. Meanwhile, if Tsfp is less than 0.5Ts and a multi-pulse contained in an erase pattern ends at low level Pb1, the next Tsfp maintains low level Pb1 of the multi-pulse.

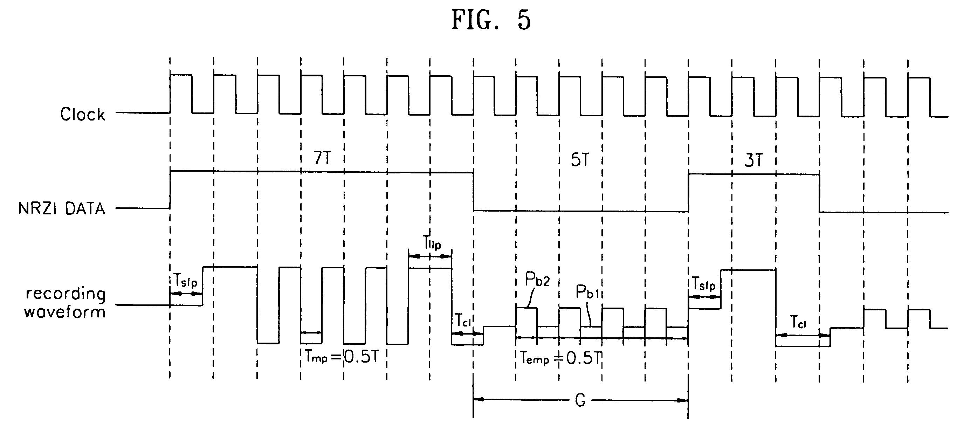

Figure 5 shows another example of a waveform generated by the recording waveform generating circuit.

Referring to Figure 5, when the high level of NRZI data is formed as a mark, and the low level is formed as a space, the recording waveform includes a recording pattern for recording a mark of a 7T length, an erase pattern for forming a space of a 5T length, and a recording pattern for recording a mark of a 3T length.

The recording pattern is composed of a pulse train. Also, the erase pattern is formed with a pulse train as shown in interval G. Tmp indicates the width of a multi-pulse forming a recording pattern. Here, the multi-pulse indicates at least one pulse having the same width and power. In the present embodiment, Tmp is 0.5Ts. Tlp indicates the width of the last pulse forming a recording pattern. Tcl indicates the width (duration time) of a cooling pulse. The cooling pulse extends from a recording pattern to an erase pattern. Temp indicates the width of an erase multi-pulse constituting an erase pattern. In the present embodiment, Temp is 0.5Ts. Tsfp indicates a period from a point when NRZI data is transited from a low level to a high level to a point (start of first pulse) when a first pulse constituting a recording pattern starts. Tsfp has an influence over the power level of an erase pattern. That is, as shown in Figure 4, if Tsfp is greater than 0.5Ts and a multi-pulse contained in an erase pattern ends at low level Pb1, the next Tsfp starts from high level Pb2 of the multi-pulse. Meanwhile, if Tsfp is less than 0.5Ts and a multi-pulse contained in an erase pattern ends at low level Pb1, the next Tsfp maintains low level Pb1 of the multi-pulse.

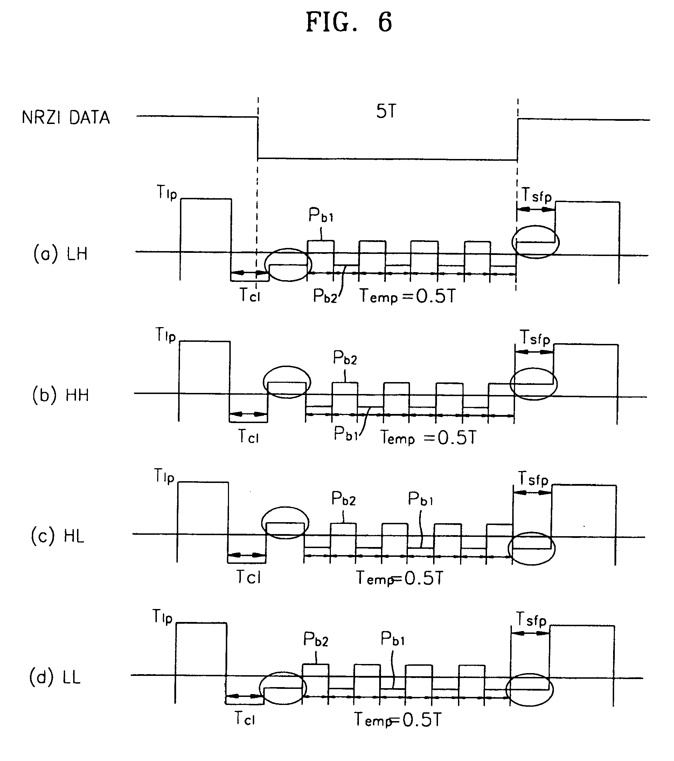

Figures 6a through 6d are waveforms for explaining four types of erase patterns according to a preferred embodiment of the present invention.

Referring to Figures 6a through 6d, the erase patterns according the present invention are divided into four types: (a) LH, (b) HH, (c) HL, and (d) LL. The differences of erase patterns are marked by circles so that the differences can be easily understood. First, (a) LH indicates that the power of the leading pulse forming an erase pattern is the same as the low level Pb1 of the following erase multi-pulse and after the last erase multi-pulse forming the erase pattern ends at the low level Pb1, the power level of the following Tsfp is the same as the high level Pb2 of the erase multi-pulse. (b) HH indicates that the power of the leading pulse forming an erase pattern is the same as the high level Pb2 of the following erase multi-pulse and after the last erase multi-pulse forming the erase pattern ends at the high level Pb2, the level of the following Tsfp continues to be as the high level Pb2 of the erase multi-pulse. (c) HL indicates that the power of the leading pulse forming an erase pattern is the same as the high level Pb2 of the following erase multi-pulse and after the last erase multi-pulse forming the erase pattern ends at the high level Pb2, the level of the following Tsfp is the same as the low level Pb1 of the erase multi-pulse. Finally, (d) LL indicates that the power of the leading pulse forming an erase pattern is the same as the low level Pb1 of the following erase multi-pulse and after the last erase multi-pulse forming the erase pattern ends at the low level Pb1, the level of the following Tspf continues to be as the low level Pb1 of the erase multi-pulse.

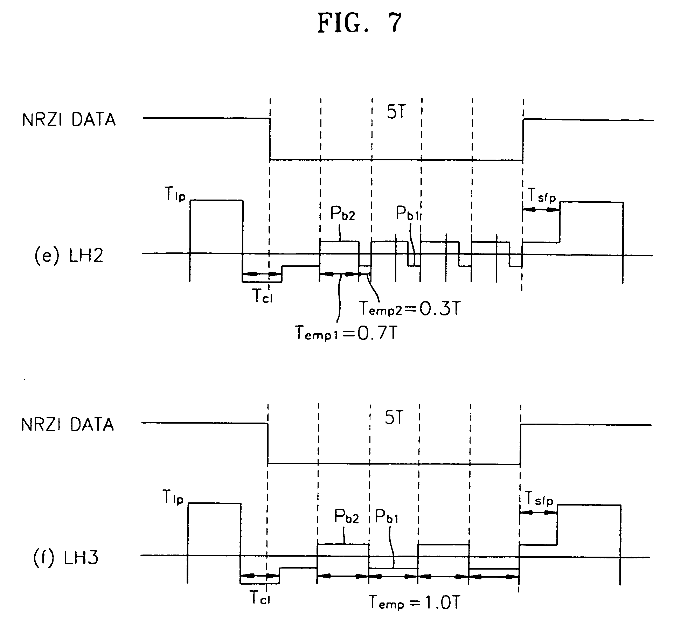

Figures 7e and 7f are other examples of LH of Figure 6a. Referring to Figures 7e and 7f, (e) LH2 is the same as (a) LH of Figure 6, except that Temp1, the duration time of the high level Pb2 of an erase multi-pulse forming a cycle, is 0.7Ts and Temp2, the duration time of the low level Pb1 of the erase multi-pulse, is 0.3Ts. Also, (f) LH3 is the same as (a) LH of Figure 6, except that the duration time of the high level Pb2 or the low level Pb1 of the erase multi-pulse is 1.0T. Here, the ratio of Temp1 and Temp2, that is, the ratio of the duration time of the high level Pb2 and that of the low level Pb1 of the erase multi-pulse forming a cycle can be changed as m:n in a variety of ways. (Here, m, n are integers.) Thus, the preferred recording waveform has an erase pattern containing an erase multi-pulse of which power is high level Pb2 or low level Pb1, and therefore distortion of the trailing edge of a mark is prevented and the characteristic of reproducing is improved. In particular, in the recording waveforms shown in the embodiments described above, the duration time of the high level Pb2 and the low level Pb1 of the erase multi-pulse is adjusted within a scope between 0.25Ts and 0.75Ts for clock cycle T, and a duration time appropriate to the heat characteristic of the disc 200 is selected. Therefore, the characteristic of reproducing is more improved.

Meanwhile, information on the four types of erase patterns (type information) may be recorded in a lead-in area of a recordable disc or may be included in a wobble signal as one of header information items. In this case, when data is recorded, recording apparatus reads type information from the lead-in area or from the wobble signal, and forms a mark or a space by generating a corresponding waveform.

In addition, the four types of erase patterns may be used as a symbol indicating X times speed of a disc or the kind of a mark when data is recorded and reproduced. For example, the erase pattern may indicate information, "the speed of a disc using LH type erase pattern is 20-multiple times speed."

In order to test the effect of the present invention, the shapes of a mark recorded in a simulation was observed. The structure used in the simulation is shown in table 1. The disc used in the simulation has a 4-layered film structure.

**Table 1**

| | Substrate | Dielectric film | Recording film | Dielectric film | Reflecting film |
|---|---|---|---|---|---|
| Material | PC | ZnS-SiO₂ | Sb-Te eutectic | ZnS-SiO₂ | Ag alloy |
| Thickness | 0.6mm | 128nm | 14nm | 16nm | 30nm |

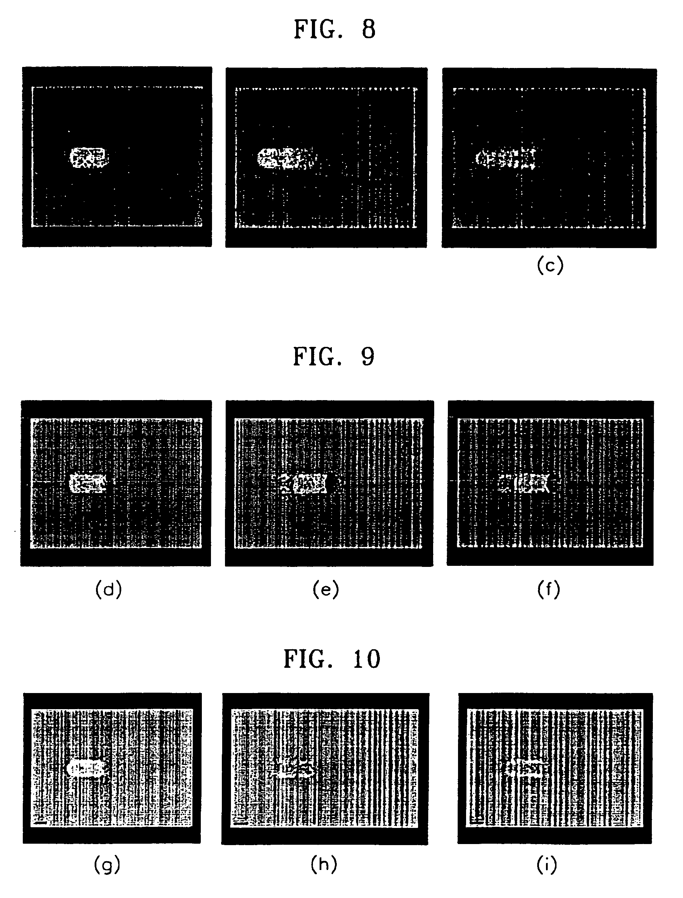

The conditions of the simulations includes a wavelength of 405nm, the Number of Apertures (NA) 0.65, and a linear velocity of 6 m/s. In order to observe the shape of a mark, after a recording mark of 8T is recorded, the next recording mark of 8T is recorded by overlapping 4T of the previous recording mark of 8T. Figures 8 through 10 show the comparison results of the mark shapes when the prior art recording waveform was used and the mark shapes when the recording waveform according to the present invention was used. In Figure 8, (a) shows a mark formed by the simulation, (b) shows a mark formed on (a) by a recording waveform according to the present invention, and (c) shows a mark formed on (a) by the prior art recording waveform. Likewise, in Figure 9, (d) shows a mark formed by the simulation, (e) shows a mark formed by a recording waveform having a erase pattern according to the present invention, and (f) shows a mark formed by a recording waveform having the prior art DC erase pattern. In Figure 10, (g) shows a mark formed by the simulation, (h) shows the result of erasing the mark of (g) by the erase pattern according to the present invention, and (i) shows the result of erasing the mark of (g) by the prior art DC erase pattern.

Table 2 shows the parameters of thin films used in a simulation for interpreting heat.

**Table 4**

| Material | λ=405nm | | C(J/cm³K) | k(W/cmK) |
|---|---|---|---|---|
| | n | K | | |
| ZnS-SiO₂ | 2.300 | 0.000 | 2.055 | 0.0058 |
| Sb-Te eutectic (Crystal) | 1.650 | 3.150 | 1.285 | 0.0060 |
| Sb-Te eutectic (Amorphous) | 2.900 | 2.950 | 1.285 | 0.0060 |
| Ag alloy | 0.170 | 2.070 | 2.450 | 0.2000 |

Referring again to simulation results of Figures 8 through 10, it is shown that the trailing edge of the mark formed by the recording waveform having the erase pattern according to the present invention of (b) of Figure 8 is better than the trailing edge of the mark formed by the recording waveform having the prior art DC erase pattern of the prior art method of (c) of Figure 8. Like the trailing edges, the shape of the leading edge of the mark is better when the erase pattern according to the present invention is used as shown in Figure 9. The results of the simulation shows that the shape of a mark when the recording waveform having the erase pattern formed with the erase multi-pulse is used is improved compared to the prior art. By adjusting the shape, width, and power level of the erase multi-pulse, distortion of the shape of a mark can be more reduced.

In order to experimentally verify the effect of the present invention, parameters needed in obtaining the recording waveforms shown in Figures 4 and 5, that is, the duration time and the power level, were obtained from 4.7GB DVD-RAM and 4.7GB DVD-RW disc, using a DVD evaluator of which the laser wavelength is 650nm and NA is 0.60. Then, the characteristics of repetitive recording/reproducing according to the present invention were compared with the prior art method.

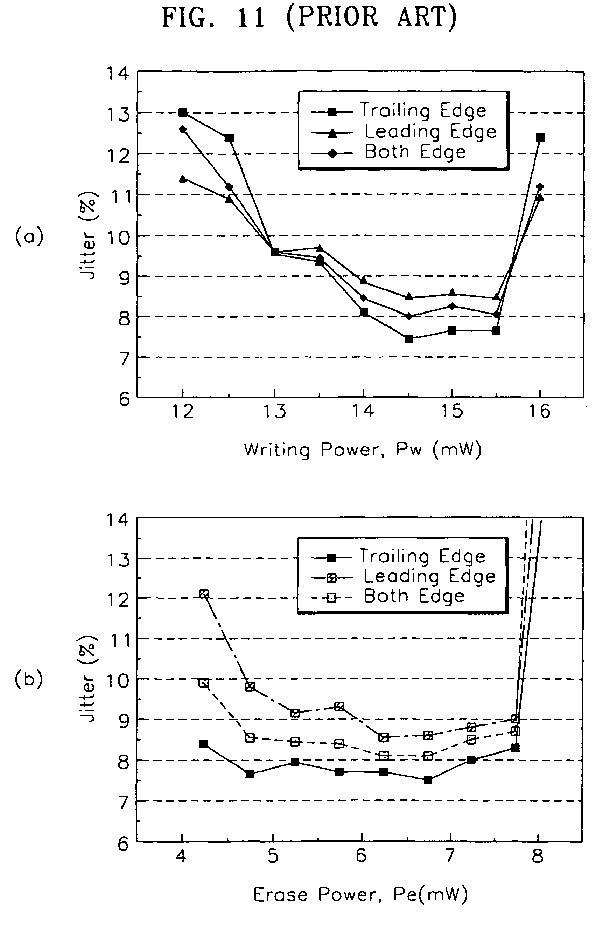

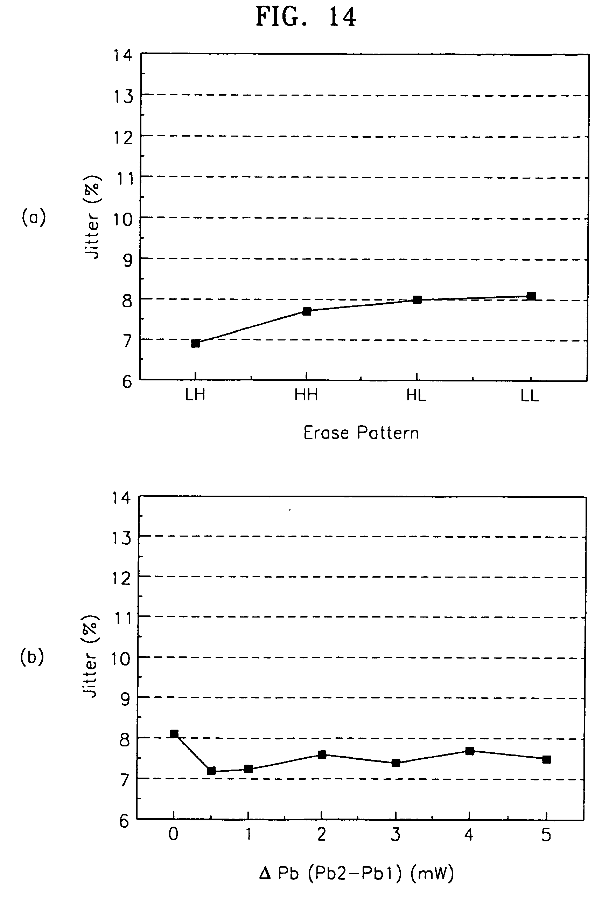

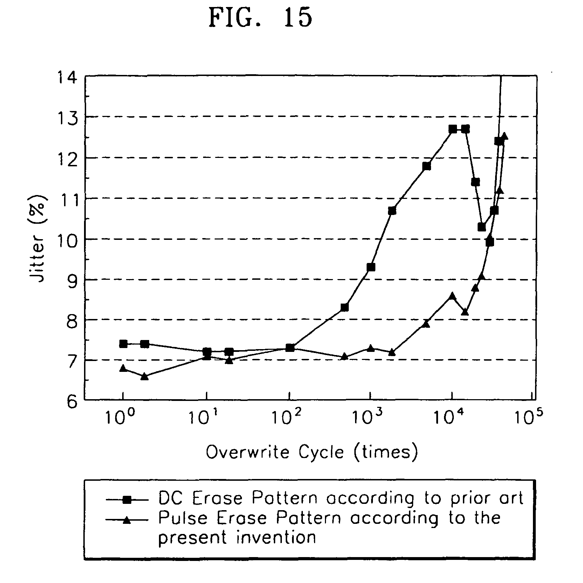

Figures 11 through 15 are graphs showing the characteristics of the DVD-RAM. Figures 11 through 13 show the features of power and time of recording using a recording waveform with a DC erase pattern of prior art, and Figures 14 and 15 show improved features of recording using a recording waveform of the present invention. In Figure 11, (a) and (b) show jitter characteristics with respect to recording power and erase power, respectively, for the leading edge, trailing edge, and both edges of a mark in the prior art DC erase. Based on (a) and (b), 14.5mW recording power and 6mW erase power were selected for experiments.

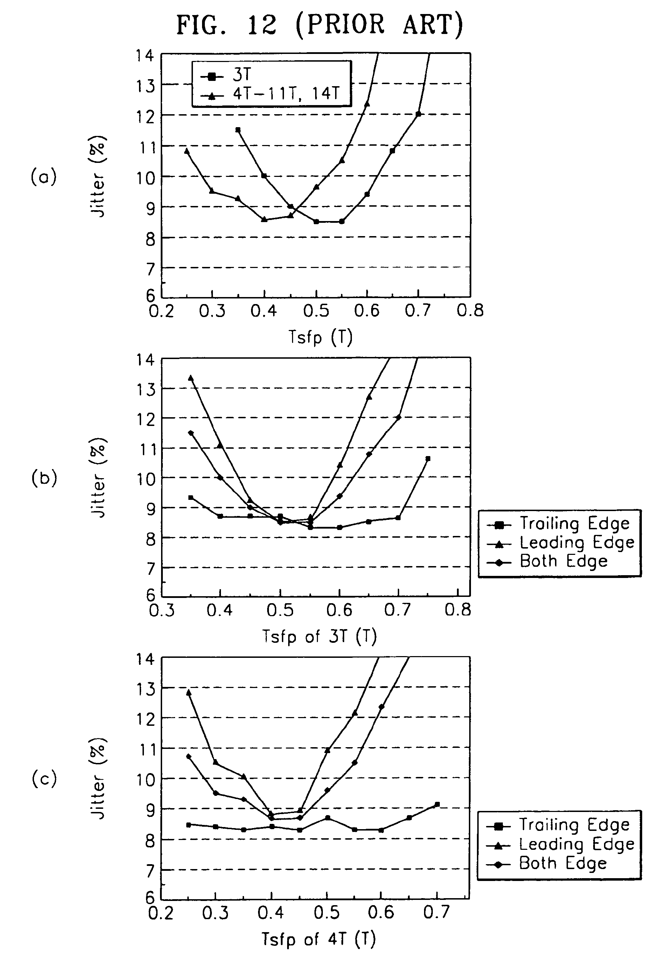

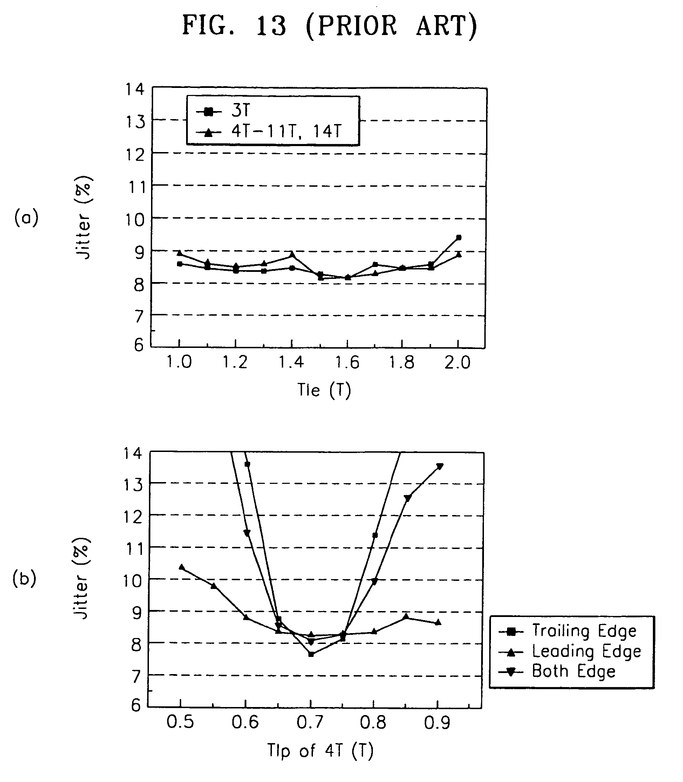

Figures 12 and 13 show the measured results in the prior art DC erase.

Referring to (a), (b), and (c) of Figure 12 and (a) and (b) of Figure 13, the most preferable jitter characteristics are shown when Tsfp = 0.5Ts and when Tsfp = 0.4Ts. Tle didn't affect the jitter characteristics, and Tlp was good when the cycle is 0.7Ts.

Based on the parameters experimentally obtained in this way, a mark was formed with the recording waveform having the four types of erase patterns described above, and the characteristics of the formed mark were measured as the following.

Figure 14 shows the jitter characteristics of the four types according to the present invention shown in Figure 6.

Referring to Figure 14, it can be inferred that a jitter characteristic is good when recording using a recording waveform with an erase pattern, i.e., any one of four types of erase pattern shown in Figure 6, of the present invention. Especially, referring to (a) of Figure 14, it is shown that LH type is the best among the four types. Referring to (b) of Figure 14, when the erase pattern formed with the erase multi-pulse according to the present invention is used in erasing a mark, the jitter characteristics of ΔPb(Pb2 - Pb1) which is the difference between the high level and low level of the erase multi-pulse is shown. It is shown that up to 5mW there are no big difference.

Figure 15 shows the jitter characteristics of the results of repetitive recording/reproducing using the recording waveform having the erase pattern according to the present invention compared to prior art.

Referring to Figure 15, it is easily understood that when a mark is erased using the erase multi-pulse according to the present invention, the result is good, especially in the repetitive recording characteristics aspect.

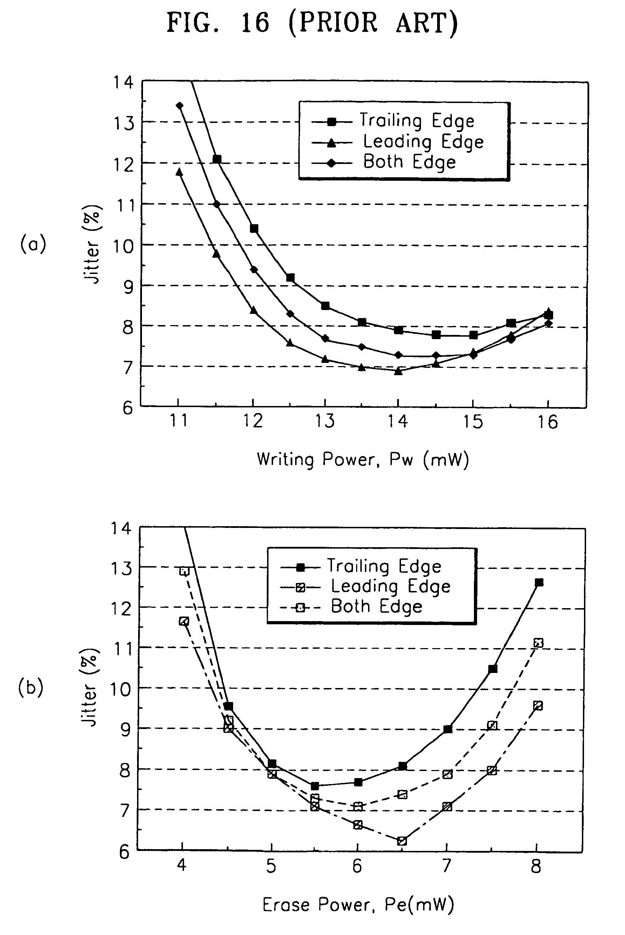

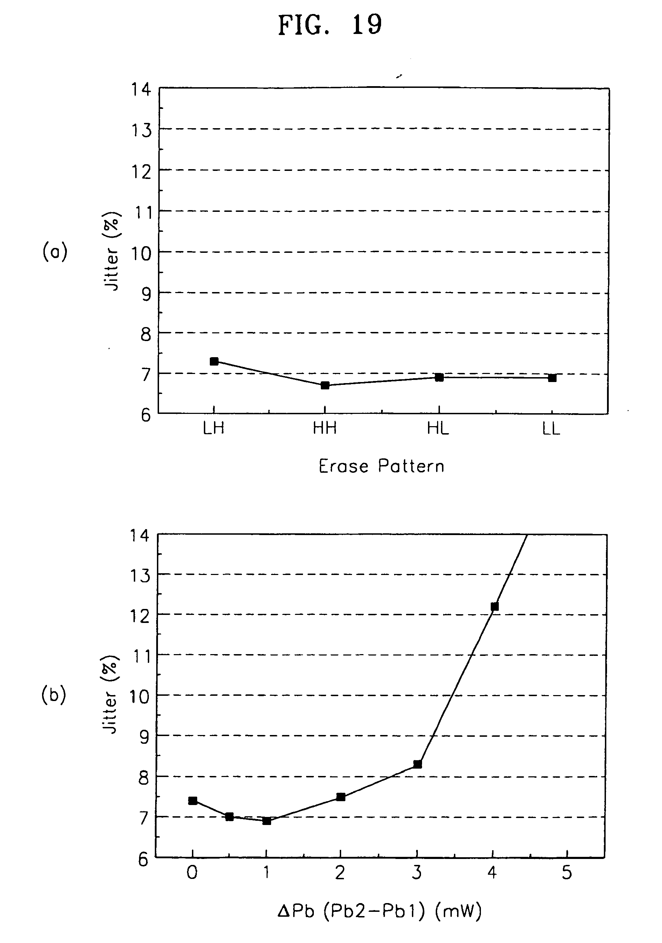

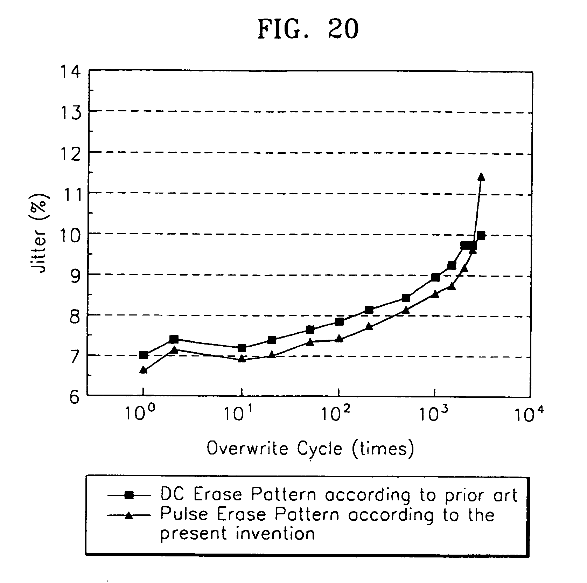

Figures 16 through 20 are graphs showing the characteristics of the DVD-RW. Figures 16 through 18 show the features of power and time of recording using a recording waveform with a DC erase pattern of prior art, and Figures 19 and 20 show improved features of recording using a recording waveform of the present invention.

In Figure 16, (a) and (b) show jitter characteristics with respect to recording power and erase power, respectively, for the leading edge, trailing edge, and both edges of a mark in the prior art DC erase. Based on (a) and (b), 14.0mW recording power and 6mW erase power were selected.

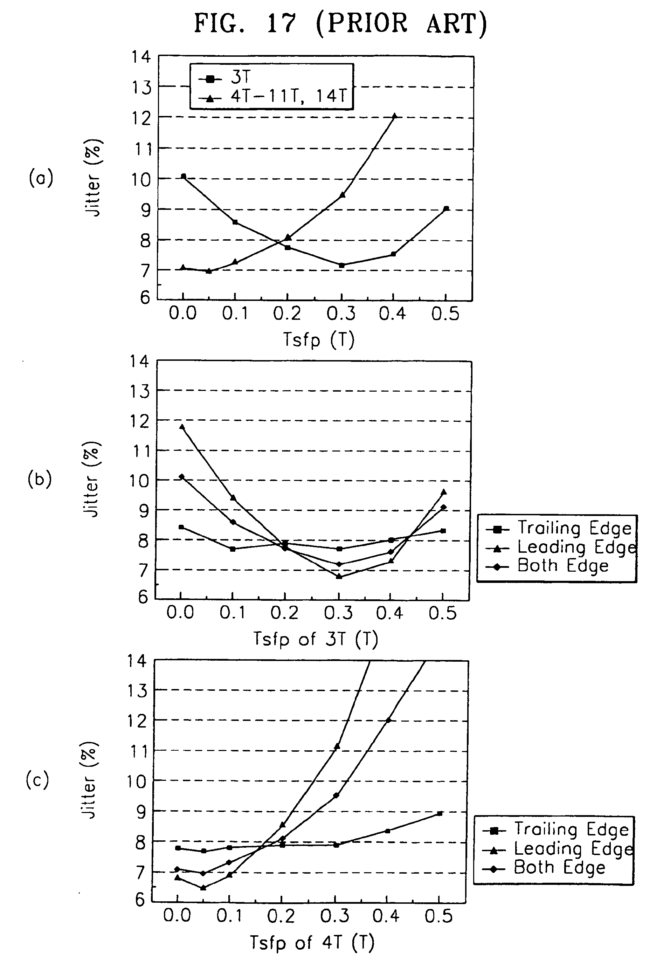

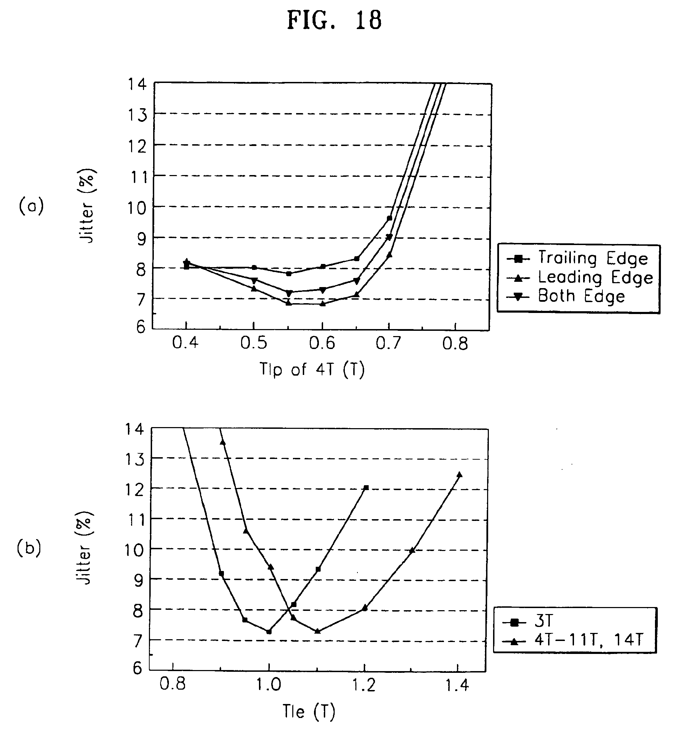

Figures 17 and 18 show the measured results in the prior art DC erase.

Referring to Figures 17 and 18, the most preferable jitter characteristics are shown when Tsfp = 0.3Ts and when Tsfp = 0.05Ts. Tle was good in 0.55Ts, and Tlp was good in 1.0T and 1.1Ts.

Based on the parameters experimentally obtained in this way, a mark was formed with the recording waveform having the four types of erase patterns described above, and the reproducing characteristics of the formed mark were measured as the following.

Figure 19 shows the jitter characteristics of the four types shown in Figure 6.

Referring to Figure 19, it is shown that LH type is the best among the four types. When the erase pattern formed with the erase multi-pulse according to the present invention is used in erasing a mark, the jitter characteristics of ΔPb(Pb2 - Pb1) which is the difference between the high level and low level of the erase multi-pulse is shown. Since the characteristics are suddenly degraded from 3mW, 1mW was selected as the condition for the repetitive recording/reproducing experiment.

Figure 20 shows the jitter characteristics of the results of repetitive recording/reproducing using the recording pulse having the erase pattern according to the present invention.

Referring to Figure 20, it is easily understood that when a mark is erased using the erase multi-pulse according to the present invention, the result is good, especially in the repetitive recording characteristics aspect. However, the jitter characteristics were suddenly degraded from 2,000 times. Therefore, it is shown that the pulse erase method according to the present invention is advantageous up to 1,000 times repetitive recording that is guaranteed in the normal DVD-RW.

Meanwhile, the above experiments followed the DVD formats and therefore the EFM+ modulation method was used. However, if any of other modulation methods that are normally used, for example, RLL(1, 7), D(8 - 15), and Dual modulation, is used, the result will be the same.

A recording method according to a preferred embodiment of the present invention based on the structure described above will now be explained.

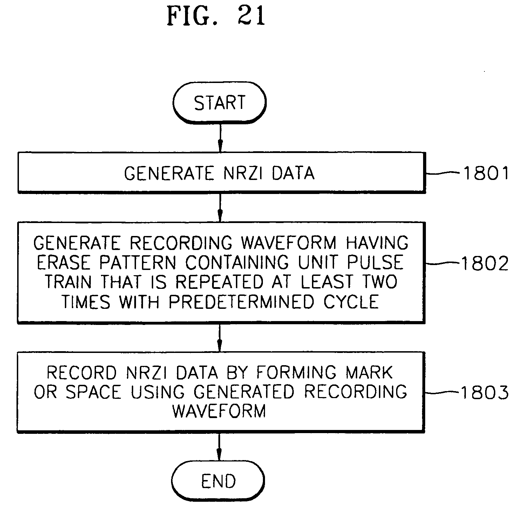

Figure 21 is a flowchart showing a recording method according to a preferred embodiment of the present invention.

Referring to Figure 21, the recording apparatus receives data from the outside, modulates the data, and generates NRZI data in step 1801. Then, the recording apparatus generates a recording waveform having an erase pattern containing an erase multi-pulse in step 1802. Using the generated recording waveform, a mark or a space is formed on the optical disc 200 in step 1803.

A method and an example of apparatus has been described for recording data in which the recording waveform prevents distortion of the shape of a mark due to heat interference and heat accumulation when data is recorded and improves the shape of the mark so that the characteristics of recording/reproducing are improved.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of forming a first state and a second state alternatively and sequentially on an optical recording medium (200) in response to input data having a first level and a second level in an optical recording apparatus, the method comprising:
generating a recording waveform which includes a plurality of first pulses corresponding to the first level of the input data and a plurality of second pulses corresponding to the second level of the input data, the plurality of first pulses having a leading pulse and a first multi-pulse to form a recording pattern, the plurality of second pulses having a start pulse and a second multi-pulse with a first power level (P_{b1}) and a second power level (P_{b2}) to form an erase pattern;
wherein:
a power level of the start pulse of the second pulses
is set to the first power level or the second power level of the second multi-pulse;
**characterised in that**:
a power level of an ending pulse defined by a period (T_{sfp}) between an end of the erase pattern and a start point of the leading pulse of the recording pattern is set to the first power level or the second power level of the second multi-pulse according to a recording speed.

2. The method of claim 1, comprising:
generating the recording waveform which comprises a recording pattern corresponding to the first level of the input data, an erase pattern having the second multi-pulse corresponding to the second level of the input data, and a cooling pulse concatenating the recording and erase patterns.

3. The method of claim 1 or 2, further comprising:
forming the first state on the optical recording medium according to the first pulses of the first multi-pulse; and
forming the second state on the optical recording medium according to the second pulses of the second multi-pulse.

4. The method of any preceding claim, further comprising:
forming a mark as the first state on the optical recording medium according to the first multi-pulse; and
forming a space as the second state on the optical recording medium according to the second multi-pulse.

## Patentansprüche

1. Verfahren zum abwechselnden und sequentiellen Bilden eines ersten Zustands und eines zweiten Zustands auf einem optischen Aufzeichnungsmedium (200) als Reaktion auf Eingangsdaten, die einen ersten Pegel und einen zweiten Pegel aufweisen, in einer optischen Aufzeichnungsvorrichtung, wobei das Verfahren die folgenden Schritte umfasst:
Erzeugen einer Aufzeichnungssignalform, die eine Vielzahl von ersten Impulsen, die dem ersten Pegel der Eingangsdaten entsprechen, und eine Vielzahl von zweiten Impulsen, die dem zweiten Pegel der Eingangsdaten entsprechen, umfasst, wobei die Vielzahl von ersten Impulsen einen vorderen Impuls und einen ersten Mehrfachimpuls zur Bildung eines Aufzeichnungsmusters aufweist und die Vielzahl von zweiten Impulsen einen Startimpuls und einen zweiten Mehrfachimpuls mit einem ersten Leistungspegel (P_{b1}) und einem zweiten Leistungspegel (P_{b2}) zur Bildung eines Löschmusters aufweist;
wobei
ein Leistungspegel des Startimpulses der zweiten Impulse auf den ersten Leistungspegel oder den zweiten Leistungspegel des zweiten Mehrfachimpulses gesetzt wird;
**dadurch gekennzeichnet, dass**
ein Leistungspegel eines Endimpulses, der durch eine Periode (T_{sfp}) zwischen einem Ende des Löschmusters und einem Anfangspunkt des vorderen Impulses des Aufzeichnungsmusters definiert wird, gemäß einer Aufzeichnungsgeschwindigkeit auf den ersten Leistungspegel oder den zweiten Leistungspegel des zweiten Mehrfachimpulses gesetzt wird.

2. Verfahren nach Anspruch 1, das den folgenden Schritt umfasst:
Erzeugen der Aufzeichnungssignalform, die ein Aufzeichnungsmuster, das dem ersten Pegel der Eingangsdaten entspricht, ein Löschmuster, das den zweiten Mehrfachimpuls aufweist, der dem zweiten Pegel der Eingangsdaten entspricht, und einen Kühlimpuls, der das Aufzeichnungs- und Löschmuster verkettet, umfasst.

3. Verfahren nach Anspruch 1 oder 2, das ferner die folgenden Schritte umfasst:
Bilden des ersten Zustands auf dem optischen Aufzeichnungsmedium gemäß den ersten Impulsen des ersten Mehrfachimpulses; und
Bilden des zweiten Zustands auf dem optischen Aufzeichnungsmedium gemäß den zweiten Impulsen des zweiten Mehrfachimpulses.

4. Verfahren nach einem der vorhergehenden Ansprüche, das ferner die folgenden Schritte umfasst:
Bilden einer Markierung als den ersten Zustand auf dem optischen Aufzeichnungsmedium gemäß dem ersten Mehrfachimpuls; und
Bilden eines Leerraums als den zweiten Zustand auf dem optischen Aufzeichnungsmedium gemäß dem zweiten Mehrfachimpuls.

## Revendications

1. Procédé de formation d'un premier état et d'un second état de façon alternée et séquentiellement sur un support d'enregistrement optique (200) en réponse à des données d'entrée ayant un premier niveau et un second niveau dans un appareil d'enregistrement optique, le procédé consistant à :
générer une forme d'onde d'enregistrement qui comprend une pluralité de premières impulsions correspondant au premier niveau des données d'entrée et une pluralité de secondes impulsions correspondant au second niveau des données d'entrée, la pluralité de premières impulsions ayant une impulsion de tête et une première multi-impulsion afin de former un motif d'enregistrement, la pluralité de secondes impulsions ayant une impulsion de début et une seconde multi-impulsion ayant un premier niveau de puissance (P_{b1}) et un second niveau de puissance (P_{b2}) pour former un motif d'effacement ;
dans lequel :
un niveau de puissance de l'impulsion de début des secondes impulsions est réglé au premier niveau de puissance ou au second niveau de puissance de la seconde multi-impulsion;
**caractérisé en ce que** :
un niveau de puissance d'une impulsion de fin définie par une période (T_{sfp}) entre une fin du motif d'effacement et un point de début de l'impulsion de tête du motif d'effacement est réglé au premier niveau de puissance ou au second niveau de puissance de la seconde multi-impulsion en fonction d'une vitesse d'enregistrement.

2. Procédé selon la revendication 1, consistant à :
générer la forme d'onde d'enregistrement qui comprend un motif d'enregistrement correspondant au premier niveau des données d'entrée, un motif d'effacement ayant la seconde multi-impulsion correspondant au second niveau des données d'entrée, et une impulsion de refroidissement concaténant les motifs d'enregistrement et d'effacement.

3. Procédé selon la revendication 1 ou 2, consistant en outre à :
former le premier état sur le support d'enregistrement optique conformément aux premières impulsions de la première multi-impulsion ; et
former le second état sur le support d'enregistrement optique conformément aux secondes impulsions de la seconde multi-impulsion.

4. Procédé selon l'une quelconque des revendications précédentes, consistant en outre à :
former une marque en tant que premier état sur le support d'enregistrement optique conformément à la première multi-impulsion ; et
former un espace en tant que second état sur le support d'enregistrement optique conformément à la seconde multi-impulsion.
